# EUROPEAN PATENT APPLICATION

(11) **EP 2 924 590 A1**
(43) Date of publication of application: **30.09.2015**
(21) Application number: 14864980.9
(22) Date of filing: 25.07.2014
(51) Int. Cl.: G06F 17/30

(54) **PAGE RENDERING METHOD AND APPARATUS**

(30) Priority: 19.12.2013 CN 201310704331
(71) Applicant: Huawei Technologies Co., Ltd., Longgang District Shenzhen, Guangdong 518129 (CN)
(72) Inventor: DONG, Ping, Shenzhen Guangdong 518129 (CN); CHEN, Zhang, Shenzhen Guangdong 518129 (CN)
(74) Representative: Goddar, Heinz J.
(86) International application number: PCT/CN2014/083008
(87) International publication number: WO 2015/090064

(57) **Abstract**

Embodiments of the present invention provide a page rendering method and apparatus. The method includes: determining an animation element according to an animation element identifier included in a source file corresponding to a page; using the animation element, or the animation element and a sub-element of the animation element as a to-be-rendered target layer, and rendering the target layer to obtain texture corresponding to the to-be-rendered target layer; and synthesizing the texture corresponding to the to-be-rendered target layer and texture corresponding to a layer including another element in the source file, and displaying a synthesizing result on the page. By using the method provided in the embodiment of the present invention, one or more elements that may change in the future may be identified in advance, and then are used as a special layer, and When the one or more elements change, the special layer may be independently processed, which prevents another layer from being affected and effectively improves rendering performance.

## Description

### TECHNICAL FIELD

Embodiments of the present invention relate to the field of computer technologies, and in particular, to a page rendering method and apparatus.

### BACKGROUND

A browser is one of the most widely used software nowadays, a main function is to present, in a web page form, a network resource selected by a user, and this process is generally called page rendering. A key module for implementing the page rendering is a rendering engine in the browser. The rendering engine divides various elements included in a web page into several layers for rendering, each layer includes a group of elements with a same display requirement, and finally, according to a rule, content of each layer is synthesized, and a synthesizing result is displayed. However, dynamically changed elements are distributed to a plurality of layers in some animation scenarios due to a current layer division rule. When these elements are changed, the whole or most of the page needs to be re-rendered, and a re-rendering process requires complicated calculation and relatively large time consumption, which, therefore, imposes great impact on page rendering performance.

### SUMMARY

Embodiments of the present invention provide a page rendering method and apparatus, which improves page rendering performance to some extent.

According to a first aspect, an embodiment of the present invention provides a page rendering method, including:
determining an animation element according to an animation element identifier included in a source file corresponding to a page, where the animation element identifier is used to indicate the animation element;
using the animation element, or the animation element and a sub-element of the animation element as a to-be-rendered target layer, and rendering the to-be-rendered target layer to obtain texture corresponding to the to-be-rendered target layer; and
synthesizing the texture corresponding to the to-be-rendered target layer and a texture corresponding to a layer including another element in the source file, and displaying a synthesizing result on the page.

With reference to the first aspect, in a first possible implementation manner of the first aspect, the method further includes:
when any element included in the to-be-rendered target layer is hidden, determining whether the element is an element indicated by a texture hiding identifier, and if the element is the element indicated by the texture hiding identifier, hiding the texture corresponding to the to-be-rendered target layer; and
when the hidden element is redisplayed, redisplaying the hidden texture.

With reference to the first aspect, or the first possible implementation manner of the first aspect, in a second possible implementation manner of the first aspect, when content of any one or more to-be-rendered target layers of the to-be-rendered target layers changes, the method further includes:
determining the one or more to-be-rendered target layers, which are changed, of the to-be-rendered target layers according to attribute information corresponding to the to-be-rendered target layers;
re-rendering the one or more to-be-rendered target layers that are changed, to generate new texture corresponding to the to-be-rendered target layer that is changed, where texture corresponding to another to-be-rendered target layer that is unchanged on the page remains in an original state; and
synthesizing the new texture corresponding to the to-be-rendered target layer that is changed, the texture corresponding to the another to-be-rendered target layer that is unchanged, and the texture corresponding to the layer including the another element in the source file, and displaying a synthesizing result on the page.

With reference to the first aspect, or the first possible implementation manner of the first aspect, in a third possible implementation manner of the first aspect,
when location information or transparency information of any one or more to-be-rendered target layers of the to-be-rendered target layers changes, the method further includes:
determining the one or more to-be-rendered target layers, which are changed, according to the location information or the transparency information of the to-be-rendered target layers;
changing a texture attribute of texture corresponding to the one or more to-be-rendered target layers; and
synthesizing texture that is obtained after the texture attribute of the texture corresponding to the one or more to-be-rendered target layers is changed, texture corresponding to another to-be-rendered target layer that is unchanged, and the texture corresponding to the layer including the another element in the source file, and displaying a synthesizing result on the page.

With reference to the first aspect, or any one possible implementation manner of the first to third possible implementation manners of the first aspect, in a fourth possible implementation manner of the first aspect, the rendering the to-be-rendered target layer to obtain texture corresponding to the to-be-rendered target layer includes:
arranging one or more elements included in the to-be-rendered target layer;
generating a drawing command for the to-be-rendered target layer according to drawing information of the arranged element included in the to-be-rendered target layer;
drawing, according to the drawing command for the to-be-rendered target layer, an image corresponding to the to-be-rendered target layer; and
transforming the image corresponding to the to-be-rendered target layer into the texture corresponding to the to-be-rendered target layer.

According to a second aspect, an embodiment of the present invention provides a page rendering apparatus, including:
a first determining module, configured to determine an animation element according to an animation element identifier included in a source file corresponding to a page, where the animation element identifier is used to indicate the animation element;
a rendering and generating module, configured to use the animation element determined by the first determining module, or the animation element and a sub-element of the animation element as a to-be-rendered target layer, and render the to-be-rendered target layer to obtain texture corresponding to the to-be-rendered target layer; and
a synthesizing and displaying module, configured to synthesize the texture that is corresponding to the to-be-rendered target layer and obtained by the rendering and generating module, and texture corresponding to a layer including another element in the source file, and display a synthesizing result on the page.

With reference to the second aspect, in a first possible implementation manner of the second aspect, the page rendering apparatus further includes:
a texture hiding module, configured to: when any element included in the to-be-rendered target layer is hidden, determine whether the element is an element indicated by a texture hiding identifier, and if the element is the element indicated by the texture hiding identifier, hide the texture corresponding to the to-be-rendered target layer; and
a redisplaying module, configured to redisplay the hidden texture when the element hidden by the texture hiding module is redisplayed.

With reference to the second aspect, or the first possible implementation manner of the second aspect, in a second possible implementation manner of the second aspect, the page rendering apparatus further includes:
a second determining module, configured to determine, when content of any one or more to-be-rendered target layers of the to-be-rendered target layers changes, the one or more to-be-rendered target layers, which are changed, of the to-be-rendered target layers according to attribute information corresponding to the to-be-rendered target layers, where
the rendering and generating module is further configured to re-render the one or more to-be-rendered target layers that are changed and that are determined by the second determining module, to generate new texture corresponding to the to-be-rendered target layer that is changed, where texture corresponding to another to-be-rendered target layer that is unchanged on the page remains in an original state; and
the synthesizing and displaying module is further configured to synthesize the new texture corresponding to the to-be-rendered target layer that is changed, the texture corresponding to the another to-be-rendered target layer that is unchanged, and the texture corresponding to the layer including the another element in the source file, and display a synthesizing result on the page.

With reference to the second aspect, or the second possible implementation manner of the second aspect, in a third possible implementation manner of the second aspect, the page rendering apparatus further includes:
an attribute changing module, configured to: when location information or transparency information of any one or more to-be-rendered target layers of the to-be-rendered target layers changes, determine the one or more to-be-rendered target layers, which are changed, according to the location information or the transparency information of the to-be-rendered target layers; and change a texture attribute of texture corresponding to the one or more to-be-rendered target layers, where
the synthesizing and displaying module is further configured to synthesize texture that is obtained after the texture attribute of the texture corresponding to the one or more to-be-rendered target layers is changed, texture corresponding to another to-be-rendered target layer that is unchanged, and the texture corresponding to the layer including the another element in the source file, and display a synthesizing result on the page.

With reference to the second aspect, or any one possible implementation manner of the first to third possible implementation manners of second aspect, in a fourth possible implementation manner of the second aspect, the rendering and generating module is specifically configured to: arrange one or more elements included in the to-be-rendered target layer; generate a drawing command for the to-be-rendered target layer according to drawing information of the arranged element included in the to-be-rendered target layer; draw, according to the drawing command for the to-be-rendered target layer, an image corresponding to the to-be-rendered target layer; and transform the image corresponding to the to-be-rendered target layer into the texture corresponding to the to-be-rendered target layer.

It can be seen that, according to the page rendering method and apparatus provided in the embodiments of the present invention, an animation element is determined according to an animation element identifier included in a source file corresponding to a page, and the determined animation element, or the animation element and a sub-element of the animation element are used as a to-be-rendered target layer; the to-be-rendered target layer is independently rendered (texture of a layer including another element may remain unchanged) to generate texture corresponding to the to-be-rendered target layer; and finally, the generated texture of the to-be-rendered target layer and the texture corresponding to the layer including the another element are synthesized, and a synthesizing result is displayed on the page. The method provided in the embodiments of the present invention enables users to specify, according to their own requirements, one or more elements that may change in the future as an animation element, and use the animation element, or the animation element and a sub-element of the animation element as a special layer. When the one or more elements change, the special layer may be independently processed, which prevents another layer from being affected and effectively improves page rendering performance.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show some embodiments of the present invention, and persons of ordinary skill in the art may still derive other drawings from these accompanying drawings without creative efforts.
FIG 1 is a schematic flowchart of a page rendering method according to an embodiment of the present invention;
FIG. 2 is a specific schematic flowchart of rendering a to-be-rendered target layer and generating texture;
FIG. 3 is a schematic flowchart of another page rendering method according to an embodiment of the present invention;
FIG. 4 is a schematic flowchart of still another page rendering method according to an embodiment of the present invention;
FIG 5 is a schematic structural diagram of a page rendering apparatus according to an embodiment of the present invention;
FIG. 6 is a schematic structural diagram of another page rendering apparatus according to an embodiment of the present invention;
FIG. 7 is a schematic structural diagram of still another page rendering apparatus according to an embodiment of the present invention;
FIG. 8 is a schematic structural diagram of still another page rendering apparatus according to an embodiment of the present invention; and
FIG. 9 is a schematic structural diagram of still another page rendering apparatus according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

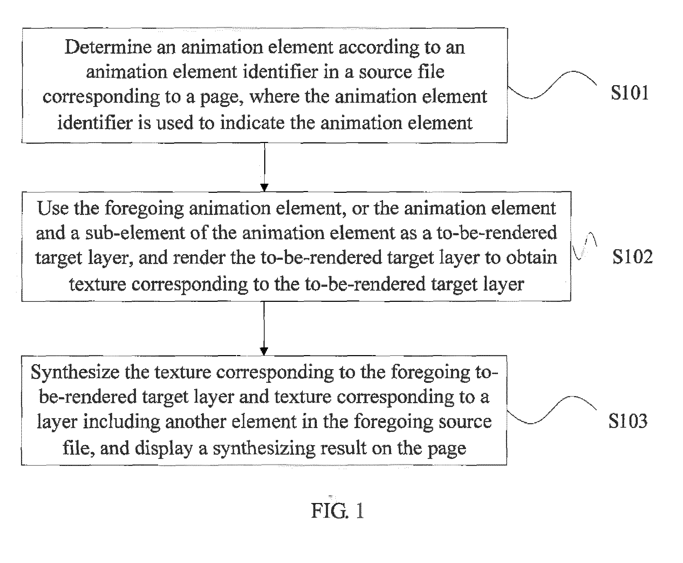

Referring to FIG 1, FIG. 1 is a schematic flowchart of Embodiment 1 of a page rendering method according to the present invention. The method may be applied to a rendering engine, preferably, may be applied to a rendering engine of a browser, such as WebKit, Geoko, Presto, or Blink, and certainly, may be applied to a rendering engine of another type, which is not limited in the embodiment of the present invention. As shown in FIG. 1, the method may include:

S101: Determine an animation element according to an animation element identifier included in a source file corresponding to a page, where the animation element identifier is used to indicate the animation element.

Specifically, a page displayed in a browser window actually includes a plurality of layers, each layer includes one or more elements, the element or some of the elements of the elements may further include one or more sub-elements, each element has attribute information and drawing information that are corresponding to each element, the attribute information is information, such as a location or color of an element on the page, and the drawing information is information related to a drawing shape of the element.

These elements and various information of these elements are stored in a source file corresponding to the page before the page is displayed, for example, a Hypertext Markup Language (hereinafter referred to as HTML) file is a typical source file. An animation element identifier is added to the source file to indicate one or more elements in the source file as an animation element, the animation element is an element that may change in the future, the animation element may include a corresponding sub-element, the number of the sub-elements is greater than or equal to 0, and whether the animation element includes a sub-element may be determined according to a structure of the source file.

S102: Use the foregoing animation element, or the animation element and a sub-element of the animation element as a to-be-rendered target layer, and render the to-be-rendered target layer to obtain texture corresponding to the to-be-rendered target layer.

The rendering engine may acquire, from a corresponding server, the source file corresponding to the page; determine the animation element by identifying the animation element identifier in a process of parsing the source file, and when the animation element includes a sub-element, also determine the sub-element; and then, determine the animation element, or the animation element and the sub-element of the animation element as the to-be-rendered target layer. It should be noted that, if there is a plurality of animation elements, each animation element of the plurality of animation elements is used as a to-be-rendered target layer, or each animation element and a sub-element of each animation element are independently used as a to-be-rendered target layer, that is, a plurality of to-be-rendered target layers may be finally obtained.

Further, the foregoing determined to-be-rendered target layer is independently rendered, which may optionally be implemented by using a corresponding software command. The to-be-rendered target layer is placed in an independent rendering module for executing a rendering process.

S103: Synthesize the texture corresponding to the foregoing to-be-rendered target layer and texture corresponding to a layer including another element in the foregoing source file, and display a synthesizing result on the page.

Specifically, in the foregoing page rendering process, only the to-be-rendered target layer is independently rendered to generate the texture corresponding to the to-be-rendered target layer, and the texture corresponding to the layer at which the another element is located remains unchanged. Upon the final display, only the foregoing generated texture of the to-be-rendered target layer and the texture corresponding to the layer including the another element need to be synthesized, and the synthesizing result is displayed on the page.

It can be seen that, according to the page rendering method provided in the embodiment of the present invention, an animation element is determined according to an animation element identifier included in a source file corresponding to a page, and the determined animation element, or the animation element and a sub-element of the animation element are used as a to-be-rendered target layer; the to-be-rendered target layer is independently rendered (texture of a layer including another element may remain unchanged) to generate texture corresponding to the to-be-rendered target layer; and finally, the generated texture of the to-be-rendered target layer and the texture corresponding to the layer including the another element are synthesized, and a synthesizing result is displayed on the page. The method provided in the embodiment of the present invention enables users to specify, according to their own requirements, one or more elements that may change in the future as an animation element, and use the animation element, or the animation element and a sub-element of the animation element as a special layer. When the one or more elements change, the special layer may be independently processed, which prevents another layer from being affected and effectively improves page rendering performance.

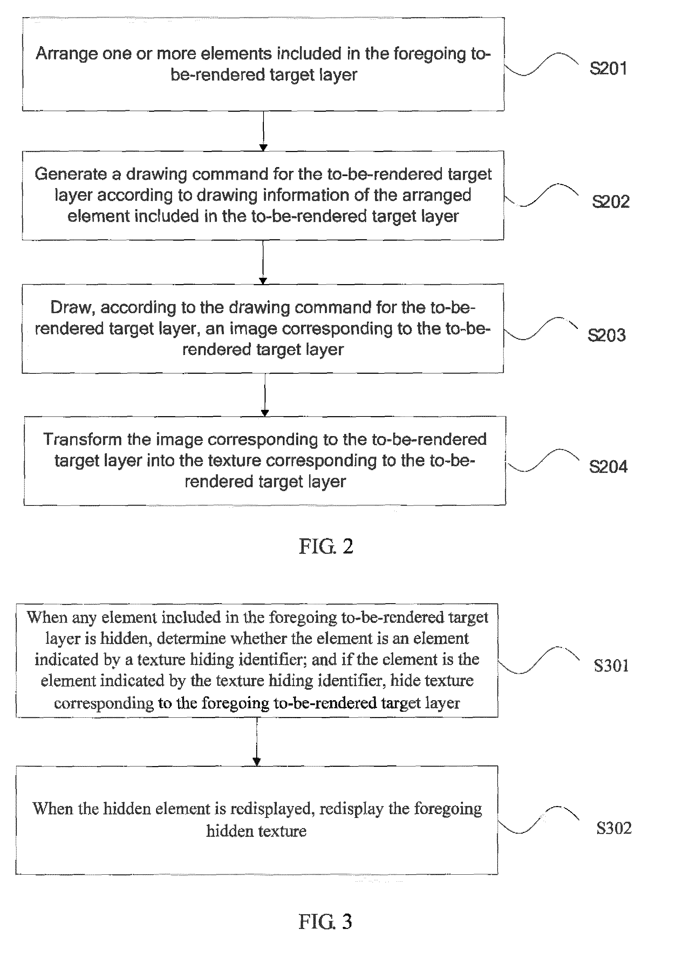

Based on the foregoing embodiment shown in FIG. 1, as a feasible implementation manner of the embodiment of the present invention, FIG 2 is a specific schematic flowchart of rendering a to-be-rendered target layer and generating texture. Referring to FIG. 2, the step includes:

S201: Arrange one or more elements included in the foregoing to-be-rendered target layer.

Specifically, when animation occurs on the page, because these elements that involve in the animation are identified in advance in the embodiment of the present invention, and these elements are all included in the to-be-rendered target layer, only the one or more elements of the to-be-rendered target layer need to be arranged, that is, location information, height information and the like of these elements are correspondingly arranged.

S202: Generate a drawing command for the to-be-rendered target layer according to drawing information of the arranged element included in the to-be-rendered target layer.

S203: Draw, according to the drawing command for the to-be-rendered target layer, an image corresponding to the to-be-rendered target layer.

Specifically, each element has its own drawing information, and the drawing information is information representing a shape, on the page, of each element. To ensure that a rendering engine can accurately draw the elements of the to-be-rendered target layer in a subsequent image drawing process, the drawing information of these elements needs to be converted into a corresponding drawing command, so that a corresponding image is drawn according to the drawing command, where the image is actually an actual figure corresponding to these elements.

S204: Transform the image corresponding to the to-be-rendered target layer into the texture corresponding to the to-be-rendered target layer.

Specifically, after drawing of the foregoing image (which may be a bitmap image, or may be a vector image) is completed, optionally, the rendering engine may store the image, and for a storage form, the image may be stored in a tile form, or may be stored in another form, which is not limited in the embodiment of the present invention. Afterwards, the rendering engine transforms the foregoing image into the corresponding texture, the corresponding texture and another texture are synthesized, and a synthesizing result is displayed on the page.

It should be noted that, the foregoing rendering process of steps S201 to S204 may be implemented with reference to the prior art, which is elaborated in the embodiment of the present invention.

FIG. 3 is a flowchart of Embodiment 2 of a page rendering method according to the present invention. A scenario involved in the embodiment is processing that is performed when an element of a to-be-rendered target layer needs to be hidden. As shown in FIG. 3, the method may include:
S301: When any element included in the foregoing to-be-rendered target layer is hidden, determine whether the element is an element indicated by a texture hiding identifier, and if the element is the element indicated by the texture hiding identifier, hide the texture corresponding to the foregoing to-be-rendered target layer.
S302: When the hidden element is redisplayed, redisplay the foregoing hidden texture.

Specifically, when a user needs to hide any element included in the to-be-rendered target layer, if the element is the element that is indicated in advance by the texture hiding identifier in the source file, a rendering engine hides the texture corresponding to the foregoing to-be-rendered target layer. The foregoing texture hiding identifier is used to indicate that texture corresponding to a layer at which the element indicated by the texture hiding identifier is located does not need to be deleted. Specifically, for example, an attribute corresponding to the texture is automatically changed to "hidden", so that a computer learns the attribute and hide the texture, but data corresponding to the texture is still retained.

In addition, it should be noted that, the foregoing element indicated by the texture hiding identifier may be the foregoing animation element, and may also be another element of the to-be-rendered target layer. The texture hiding identifier is used to indicate to the computer that, when the element identified by the identifier needs to be hidden, the element does not need to be deleted and only needs to be hidden.

In the prior art, when an element is to be hidden, processing that is performed is deleting texture corresponding to a layer at which the element is located, and when the element needs to be redisplayed, the layer at which the element is located needs to be re-rendered, thereby increasing an overhead of the computer. However, in the embodiment of the present invention, when the user needs to display the element again (the element is the element indicated by the foregoing texture hiding identifier), an operation performed by the rendering engine is redisplaying the hidden texture of the to-be-rendered target layer without re-rendering the texture of the to-be-rendered target layer by the rendering engine, thereby greatly reducing the overhead of the computer.

It can be seen that, according to the page rendering method provided in the embodiment of the present invention, a user uses a texture hiding identifier to indicate an element of a to-be-rendered target layer in advance, a rendering engine hides and stores the element according to the texture hiding identifier when the rendering engine needs to hide the element, and upon redisplaying, only texture of the to-be-rendered target layer needs to be redisplayed. Therefore, that an element of the to-be-rendered target layer can be hidden only by deleting the texture of the to-be-rendered target layer in the prior art is avoided, the overheads of the computer are greatly reduced, and rendering performance is improved more effectively.

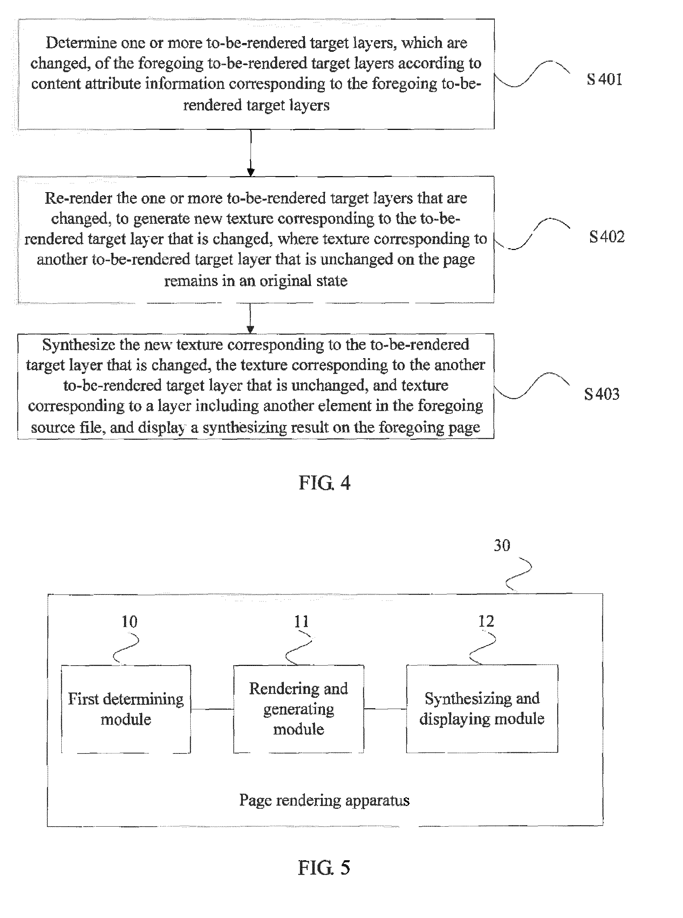

FIG. 4 is a flowchart of Embodiment 3 of a page rendering method according to the present invention. As a feasible implementation manner of the embodiment of the present invention, the method according to the embodiment relates to processing that is performed when any one layer of the to-be-rendered target layers changes.

Specifically, when a plurality of to-be-rendered target layers is determined in the foregoing, content of any one or more to-be-rendered target layers of the to-be-rendered target layers may change, and when the change occurs, referring to FIG. 4, the page rendering method according to the embodiment of the present invention may further include:

S401: Determine the one or more to-be-rendered target layers, which are changed, of the foregoing to-be-rendered target layers according to content attribute information corresponding to the foregoing to-be-rendered target layers.

Specifically, a rendering engine determines the plurality of to-be-rendered target layers according to an animation element indicated by an animation element identifier, and the rendering engine at first renders the determined plurality of to-be-rendered target layers to acquire corresponding texture; in addition, texture of a layer at which another element is located still remains in an original state. Further, when the content on the page changes because of a corresponding operation performed by a user on the page, and the change occurs at the one or more to-be-rendered target layers of the foregoing to-be-rendered target layers, that is, the content of the one or more to-be-rendered target layers of the foregoing to-be-rendered target layers changes at this time, the content attribute information corresponding to the to-be-rendered target layers changes, and the rendering engine can determine the one or more to-be-rendered target layers, which are changed, of the foregoing plurality of to-be-rendered target layers according to the content attribute information.

It should be noted that, the content attribute information corresponding to the to-be-rendered target layers is information that indicates, to the rendering engine, that the change at the foregoing one or more to-be-rendered target layers is a content change. The content attribute information changes with a content change at the to-be-rendered target layers, so that the rendering engine learns these to-be-rendered target layers at which the content change occurs, and further re-draws texture of these to-be-rendered target layers at which the content change occurs.

The content change at the layer according to the embodiment of the present invention refers to an operation, such as addition, deletion, or modification, of an element included in the layer, and a change at the entire layer, such as a location change or a transparency change at the layer, is not included in the so-called content change. For example, when some elements are added or deleted at the to-be-rendered target layer, these added or reduced elements may correspond to an added or deleted image on an actual page. In this case, the change at the to-be-rendered target layer is actually the content change, and the rendering engine is required to re-draw the texture of the to-be-rendered target layer that is changed. Therefore, the to-be-rendered target layer at which the content change occurs notifies, by changing its own content attribute information, the rendering engine that new texture needs to be generated for the to-be-rendered target layer at which the content change occurs.
S402: Re-render the one or more to-be-rendered target layers that are changed, to generate new texture corresponding to the foregoing changed to-be-rendered target layer that is changed, where texture corresponding to another to-be-rendered target layer that is unchanged on the foregoing page remains in an original state.

Specifically, the rendering engine re-renders the determined one or more to-be-rendered target layers that are changed, to acquire the new texture corresponding to these determined to-be-rendered target layers that are changed, and in addition, the texture of the another to-be-rendered target layer, which is unchanged, of the foregoing determined to-be-rendered target layers remains in the original state.

For a specific process of rendering the foregoing one or more to-be-rendered target layers that are changed to acquire the new texture corresponding to these to-be-rendered target layers that are changed, reference may be made to the embodiment shown in FIG 2, and details are not described herein again.
S403: Synthesize the new texture corresponding to the foregoing to-be-rendered target layer that is changed, the texture corresponding to the another to-be-rendered target layer that is unchanged, and texture corresponding to a layer including another element in the foregoing source file, and display a synthesizing result on the foregoing page.

It can be seen that, according to the page rendering method provided in the embodiment of the present invention, a user determines an animation element by using an animation element identifier included in a source file corresponding to a page, a rendering engine determines a to-be-rendered target layer according to the determined animation element, or the animation element and a sub-element of the animation element, and when content of one or more to-be-rendered target layers of the at least one to-be-rendered target layer changes after texture corresponding to the at least one to-be-rendered target layer is displayed on the page, only to-be-rendered target layers at which the content change occurs need to be re-rendered, so that a process of re-rendering all the to-be-rendered target layers is avoided, rendering performance is further improved, and overheads of a computer are reduced.

In another scenario, if location information or transparency information of any one or more to-be-rendered target layers of the foregoing to-be-rendered target layers changes because the user performs a corresponding operation on the page, the rendering engine determines the one or more to-be-rendered target layers, which are changed, according to the location information or the transparency information of the to-be-rendered target layers, and then, changes a texture attribute of texture corresponding to the one or more to-be-rendered target layers; and texture obtained after the attribute changes, texture corresponding to another to-be-rendered target layer that is unchanged, and texture corresponding to a layer including another element in the foregoing source file are synthesized, and a synthesizing result is displayed on the foregoing page.

It should be noted that, the location information or the transparency information of the to-be-rendered target layer and the content attribute information corresponding to the to-be-rendered target layer mentioned in the foregoing embodiment are different concepts. The content attribute information corresponding to the to-be-rendered target layer mainly indicates whether content of the to-be-rendered target layer changes, and the location information or the transparency information of the to-be-rendered target layer indicates that a change at the to-be-rendered target layer is a non-content change.

It can be seen that, according to the page rendering method provided in the embodiment of the present invention, a user determines an animation element by using an animation element identifier included in a source file corresponding to a page, a rendering engine determines a to-be-rendered target layer according to the determined animation element, or the animation element and a sub-element of the animation element, and when location information or shape information of one or more to-be-rendered target layers of the multiple to-be-rendered target layers changes after texture corresponding to the to-be-rendered target layers is displayed on the page, only a texture attribute of the original texture of these to-be-rendered target layers that are changed needs to be changed, so that a process of re-rendering all the to-be-rendered target layers is avoided, rendering performance is further improved, and the overheads of the computer are reduced.

To more clearly describe a beneficial effect that is brought by an embodiment of the present invention when a corresponding rendering engine renders a page, the following embodiment uses WebKit, as a rendering engine, as an example to describe the page rendering method provided in the present invention. It can be understood that, the embodiment of the present invention is not limited to the WebKit rendering engine.

### Embodiment 4

For ease of understanding, a basic process in which the WebKit rendering engine performs page rendering is first introduced: the WebKit engine requests a network resource from a network server and parses the network resource to obtain a plurality of elements and a cascading style sheet (Cascading Style Sheets, hereinafter referred to as CSS) attribute of each element; a document object model (Document Object Model, hereinafter referred to as DOM) tree is constructed according to the foregoing plurality of elements that are obtained; and a render tree (render tree) is generated after the foregoing CSS attribute of each element is attached to the foregoing DOM tree, where the render tree may include one root layer (render view) and a plurality of layers under the render view, and optionally, there may be one or more sub-layers under these layers. That is, the render view is corresponding to one root element (the root element includes a parent element, and the parent element includes a child element), and each layer in the render tree is corresponding to a parent element and a child element of the parent element. Afterwards, all layers in the render tree are arranged. Actually, the parent elements and the child elements of the parent elements corresponding to these layers are arranged. A corresponding drawing command is generated according to drawing information of each arranged element, an image is drawn according to the drawing command, and the image is transformed into corresponding texture (Texture); and finally, the foregoing texture is synthesized, and a synthesizing result is displayed on a page.

Based on the WebKit rendering engine, the page rendering method provided in the embodiment of the present invention includes:
(1) The WebKit rendering engine acquires a source HTML file of the page. The HTML file includes a plurality of elements and element-related information, and a developer uses, in the HTML file, an animation element identifier to indicate that an elements that may change in the future are an animation element. The animation element identifier is used to indicate that the element may be included in a to-be-rendered target layer in a subsequent processing process, where the to-be-rendered target layer is an animation layer (the animation layer mentioned in the following embodiments is the to-be-rendered target layer, and an animation layer identifier mentioned in the following embodiments is the animation element identifier).
   It should be noted that, the animation element identifier may specifically use a Boolean variable. For example, isAnimationLayer is a Boolean variable. When is AnimationLayer=true, it is identified that the element is an animation element, and when isAnimationLayer=false, it is identified that the element is not an animation element; or when an isAnimationLayer identifier is appended to an element, it is determined that the element is an animation element, and when the identifier does not exist, it is determined that the element is not an animation element.
(2) The WebKit rendering engine parses the HTML file to generate a DOM tree; a corresponding CSS file is also parsed, and a parsing result is attached to the DOM tree to generate a render tree (render tree). The render tree includes at least two render layers (render layer), and each render layer includes one parent element and a child element of the parent element (there may be no child element), where the parent element and the child element may be collectively referred to as an element.
   It should be noted that, in the embodiment of the present invention, some elements in the render tree already have an animation layer identifier.
(3) The WebKit rendering engine parses the render tree, extracts an element that has an animation layer identifier and a sub-element of the element, and determines the element and the sub-element of the element as an animation layer. One or more animation layers may be determined finally, which is not limited in the embodiment of the present invention. When a plurality of animation layers is determined, information about all the animation layers may be maintained by using an animation layer list (AnimationList), where a mapping relationship between an animation layer identifier and a render layer at which the animation layer identifier is originally located may be recorded in the animation layer list.
   In the prior art, when animation occurs on a page, re-rendering of all elements is triggered because an animation layer is not distinguished from another rendering layer, which requires relatively long calculation time and results in relatively poor rendering performance. After the solution provided in the embodiment of the present invention is used, as all elements that may change have been placed in an animation layer, only the animation layer needs to be independently rendered when the page changes.
(4) When the page changes, the WebKit rendering engine renders the determined animation layer, to acquire texture corresponding to the animation layer.
   Specifically, at first, elements included in the animation layer are arranged, and the arrangement process includes determining of absolute location information, color information and the like of the elements; then, a drawing command for the animation layer is generated according to drawing information of each arranged element included in the animation layer, the drawing command is saved to SKPicture in an animation layers tree (AnimationLayersTree), and the AnimationLayersTree and the SKPicture may be regarded as a command module in software implementation; finally, an image (SKPbitmap) is drawn according to the drawing command, the image is transformed into texture corresponding to the animation layer, and optionally, the texture may be stored in a tile (Tile) form.
(5) The texture of the animation layer and texture corresponding to a layer at which another element is located are synthesized, and a synthesizing result is displayed on the page.
   It can be seen that, according to the page rendering method provided in the embodiment of the present invention, a to-be-rendered target layer is determined according to an animation element indicated, in a source file corresponding to a page, by a user by using an animation element identifier, or the animation element and a sub-element of the animation element; the to-be-rendered target layer is independently rendered (texture of a layer including another element remains unchanged) to generate texture corresponding to the to-be-rendered target layer; finally, the generated texture of the to-be-rendered target layer and texture corresponding to another layer are synthesized, and a synthesizing result is displayed on the page. The method provided in the embodiment of the present invention enables users to specify, according to their own requirements, one or more elements that may change in the future as an animation element, and use the animation element, or the animation element and a sub-element of the animation element as a special layer. When the one or more elements change, the special layer may be independently processed, which prevents another layer from being affected and effectively improves page rendering performance.

### Embodiment 5

Specifically, this embodiment may be corresponding to the embodiment shown in FIG. 3. In the embodiment of the present invention, a user may indicate, in a source file, an animation element by using an animation element identifier, or may indicate, in a source file, a to-be-hidden element by using a texture hiding identifier, and the animation element and the to-be-hidden element may be a same element, or may not be a same element. Specifically, if a WebKit rendering engine is used as an example, the texture hiding identifier may be texture reserving identifier (reservetexture).

Generally, the foregoing to-be-hidden element has a "visibility" identifier, a value of the identifier is visible by default, and it indicates that the to-be-hidden element needs to be displayed at this time. Correspondingly, an animation layer at which the element is located may have an isHidden identifier, and a value of the identifier is False by default. When the element needs to be hidden, the "visibility" of the element is set to hidden. If processing is performed according to the prior art, the WebKit rendering engine deletes previously generated texture of the animation layer to attain a purpose of hiding, and when the element needs to be redisplayed, a browser re-renders all elements of the animation layer to acquire texture of the animation layer, and then redisplays the animation layer on a page. However, in the embodiment of the present invention, the rendering engine checks a value of "reservetexture". When the value of the "reservetexture" is True, it indicates that, when the element is hidden (visibility=hidden), only the texture of the previously rendered animation layer needs to be hidden, and an isHidden attribute of the animation layer is set to True, so that the texture of the animation layer is not displayed on the page, and the previously drawn texture of the animation layer does not need to be deleted. An advantage is that, when the element needs to be displayed again on the page, only the isHidden attribute of the animation layer at which the element is located needs to be changed to False, and previously stored texture data of the animation layer may be reused, thereby improving overall rendering performance.

It can be seen that, according to the page rendering method provided in the embodiment of the present invention, a user indicates in advance an element of a to-be-rendered target layer by using a texture hiding identifier, a browser hides and stores the element according to the texture hiding identifier when the element needs to be hidden, and upon redisplaying, only texture of the to-be-rendered target layer needs to be redisplayed. Therefore, that an element of the to-be-rendered target layer can be hidden only by deleting the texture of the to-be-rendered target layer in the prior art is avoided, overheads of a computer are greatly reduced, and rendering performance is improved more effectively.

### Embodiment 6

Specifically, this embodiment is corresponding to the embodiment shown in FIG. 4.

When a plurality of animation layers is determined by a WebKit rendering engine according to an animation element indicated in an HTML file by a user by using "isAnimationlayer", the WebKit rendering engine draws texture of the determined plurality of animation layers, the texture and texture corresponding to a layer at which another element is located are synthesized, and a synthesizing result is displayed on a page. After a user performs an operation on the page, the WebKit rendering engine determines, according to an "isAnimationLayoutOnly" identifier of a rendering tree, whether a change that occurs is located at the foregoing determined plurality of animation layers. When the "isAnimationLayoutOnly" identifier is True, it indicates that the change that occurs is located only at the foregoing determined plurality of animation layers; when the "isAnimationLayoutOnly" identifier is False, it indicates that the change that occurs is also located at a layer at which another element is located, and all layers need to be re-arranged.

When the change that occurs is located only at the foregoing determined plurality of animation layers, the WebKit rendering engine determines, according to attribute information (that is, an "isDirty" identifier) of the foregoing plurality of animation layers, an animation layer, among the plurality of animation layers, at which a content change occurs. When a value of the "isDirty" identifier of some animation layers of the plurality of animation layers is True, it indicates that content of these animation layers changes, and these animation layers need to be re-rendered to acquire new texture; when a value of the "isDirty" identifier of some animation layers of the plurality of animation layers is False, it indicates that content of these animation layers does not change, and previously drawn texture continues to be used.

Finally, the WebKit rendering engine synthesizes the new texture corresponding to the foregoing changed animation layers, texture corresponding to another animation layer that is unchanged, and texture corresponding to a layer at which another element in the foregoing source file is located, and displays a synthesizing result on a page.

When the change that occurs is also located at the layer at which the another element is located, the WebKit rendering engine needs to re-arrange all the layers, texture of these layers is still drawn according to the prior art. That is, after other content (content of a non-animation layer) on the page changes, new texture of other layers and ultimate page drawing are also prepared, but texture of the animation layers is not drawn in this process (the animation layers have their own independent texture drawing process); according to another aspect, the animation layers continue to be independently drawn. Preferably, whether drawing of image texture of the animation layers is complete may be identified by using an isReady identifier. When isReady is true, it indicates that the texture of the animation layers is successfully drawn. When isReady is false, it indicates that the texture of the animation layers has not been successfully drawn. In a process of drawing the texture of the animation layers, it is unnecessary to start the texture drawing only after images of all the animation layers are well-prepared. However, when the isReady identifier of some animation layers in an animation layer tree is still false, it indicates that rendering of the entire page is not complete (that is, texture of the some animation layers is not well-prepared and not drawn on a screen). In this case, a return value in the texture drawing process needs to be set to true, so that the WebKit rendering engine learns that the foregoing animation layers at which the texture is not well-prepared needs to be drawn continuously to ensure overall rendering and displaying of the page.

It can be seen that, according to the page rendering method provided in the embodiment of the present invention, a user determines an animation element according to an animation element identifier included in a source file corresponding to a page, a rendering engine determines a to-be-rendered target layer according to the determined animation element, or the animation element and a sub-element of the animation element, and when content of one or more to-be-rendered target layers of the to-be-rendered target layers changes after texture corresponding to the to-be-rendered target layers is displayed on the page, only these to-be-rendered target layers at which the content change occurs need to be re-rendered, so that a process of re-rendering all the to-be-rendered target layers is avoided, rendering performance is further improved, and overheads of a computer are reduced.

### Embodiment 7

Specifically, this embodiment is corresponding to an embodiment in which a rendering engine performs corresponding processing when location information or transparency information of any one or more to-be-rendered target layers of the foregoing to-be-rendered target layers changes.

Specifically, when a WebKit rendering engine determines that a change that occurs on a page is located at the foregoing plurality of animation layers, the WebKit rendering engine may determine, by using a "hasOpacity" identifier or a "hasTransform" identifier of the foregoing plurality of animation layers, whether there is an animation effect with content unchanged, that is, whether location information or transparency information of the foregoing plurality of animation layers changes. When a value of the "hasOpacity" identifier or the "hasTransform" identifier is True, it indicates that the animation layers include an animation effect with content unchanged. When the value of the "hasOpacity" identifier or the "hasTransform" identifier is False, it indicates that the animation layers do not have an animation effect with content unchanged.

When the location information or the transparency information of the foregoing plurality of animation layers changes, the WebKit rendering engine changes a texture attribute of texture corresponding to the changed animation layer. Finally, the WebKit rendering engine synthesizes texture obtained after the texture attribute corresponding to the animation layer changes, texture corresponding to another animation layer that is unchanged, and texture corresponding to a layer including another element in the foregoing source file, and displays a synthesizing result on the foregoing page.

It can be seen that, according to the page rendering method provided in the embodiment of the present invention, a user determines an animation element according to an animation element identifier included in a source file corresponding to a page, a rendering engine determines a to-be-rendered target layer according to the determined animation element, or the animation element and a sub-element of the animation element, and when location information or shape information of one or more to-be-rendered target layers of the to-be-rendered target layers changes after texture corresponding to the to-be-rendered target layers is displayed on the page, only these to-be-rendered target layers at which the content change occurs need to be re-rendered, so that a process of re-rendering all the to-be-rendered target layers is avoided, rendering performance is further improved, and overheads of a computer are reduced.

Persons of ordinary skill in the art may understand that all or some of the steps of the foregoing method embodiments may be implemented by a program instructing relevant hardware. The program may be stored in a computer-readable storage medium. When the program runs, the steps of the foregoing method embodiments are performed. The foregoing storage medium includes: any medium that can store program code, such as a ROM (Read-Only Memory, read-only memory), a RAM (Random Access Memory, random access memory), a magnetic disk, or an optical disc.

Referring to FIG. 5, FIG. 5 is a schematic structural diagram of Embodiment 1 of a page rendering apparatus according to the present invention. As shown in FIG. 5, a page rendering apparatus 30 includes:
a first determining module 10, configured to determine an animation element according to an animation element identifier included in a source file corresponding to a page, where the animation element identifier is used to indicate the animation element;
a rendering and generating module 11, configured to use the animation element determined by the foregoing first determining module 10, or the animation element and a sub-element of the animation element as a to-be-rendered target layer, and render the to-be-rendered target layer to obtain texture corresponding to the to-be-rendered target layer; and
a synthesizing and displaying module 12, configured to synthesize the texture that is corresponding to the to-be-rendered target layer and obtained by the foregoing rendering and generating module 11, and texture corresponding to a layer including another element in the foregoing source file, and display a synthesizing result on the page.

The page rendering apparatus involved in this embodiment may execute the foregoing method embodiment, implementation principles and technical effects of this embodiment are similar to those of the method embodiment implementation principles and technical effects of the page rendering apparatus are similar, and details are not described herein again.

It can be seen that, according to the page rendering apparatus provided in the embodiment of the present invention, an animation element is determined according to an animation element identifier included in a source file corresponding to a page, and the determined animation element, or the animation element and a sub-element of the animation element are used as a to-be-rendered target layer; the to-be-rendered target layer is independently rendered (texture of a layer including another element may remain unchanged) to generate texture corresponding to the to-be-rendered target layer; and finally, the generated texture of the to-be-rendered target layer and the texture corresponding to the layer including the another element are synthesized, and a synthesizing result is displayed on the page. Therefore, users may specify, according to their own requirements, one or more elements that may change in the future as an animation element, and use the animation element, or the animation element and a sub-element of the animation element as a special layer. When the one or more elements change, the special layer may be independently processed, which prevents another layer from being affected and effectively improves page rendering performance.

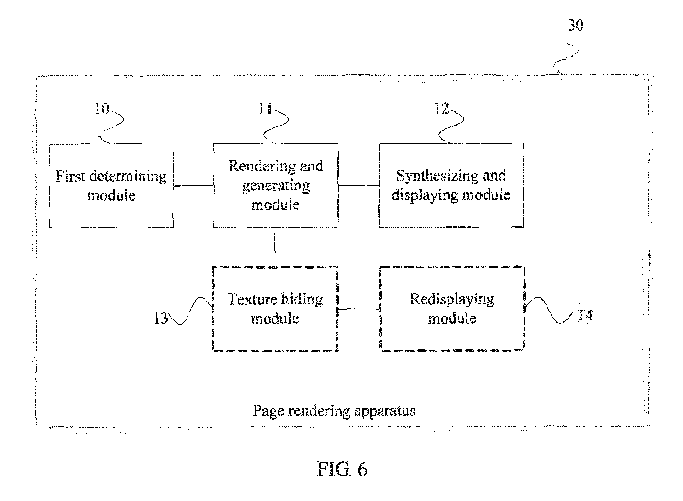

FIG. 6 is a schematic structural diagram of Embodiment 2 of a page rendering apparatus according to the present invention. Based on the embodiment shown in FIG. 5, further, the page rendering apparatus 30 may further include:
a texture hiding module 13, configured to: when any element included in the foregoing to-be-rendered target layer is hidden, determine whether the element is an element indicated by a texture hiding identifier, and if the element is the element indicated by the texture hiding identifier, hide the texture corresponding to the foregoing to-be-rendered target layer; and
a redisplaying module 14, configured to redisplay the hidden texture when the element hidden by the texture hiding module 13 is redisplayed.

The page rendering apparatus involved in this embodiment may execute the foregoing method embodiment, implementation principles and technical effects of the page rendering apparatus are similar, and details are not described herein again.

It can be seen that, according to the page rendering apparatus provided in the embodiment of the present invention, a user indicates in advance an element of a to-be-rendered target layer by using a texture hiding identifier, a rendering engine hides and stores the element according to the texture hiding identifier when the rendering engine needs to hide the element, and upon redisplaying, only texture of the to-be-rendered target layer needs to be redisplayed. Therefore, that an element of the to-be-rendered target layer can be hidden only by deleting the texture of the to-be-rendered target layer in the prior art is avoided, overheads of a computer are greatly reduced, and rendering performance is improved more effectively.

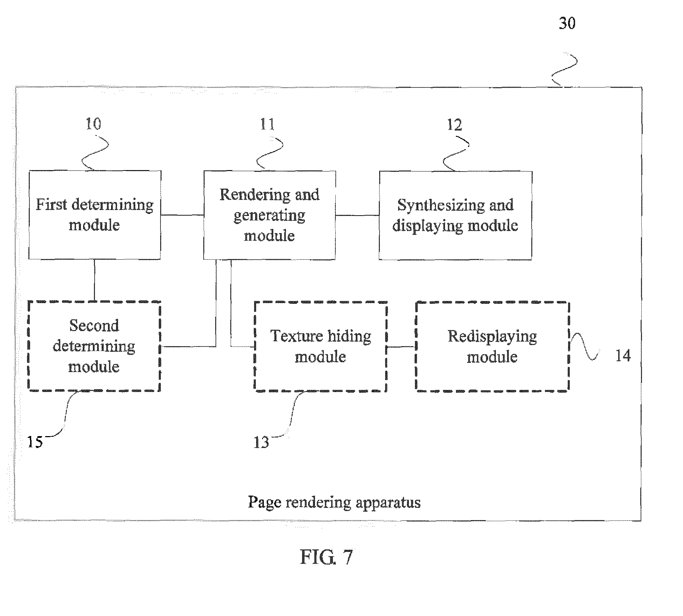

FIG. 7 is a schematic structural diagram of Embodiment 3 of a page rendering apparatus according to the present invention. Based on the embodiment shown in FIG 6, further, the foregoing page rendering apparatus 30 may further include:
a second determining module 15, configured to determine, when content of any one or more to-be-rendered target layers of the foregoing to-be-rendered target layers changes, the one or more to-be-rendered target layers, which are changed, of the foregoing to-be-rendered target layers according to attribute information corresponding to the foregoing to-be-rendered target layers.

The rendering and generating module 11 is further configured to re-render the foregoing one or more to-be-rendered target layers that are changed and that are determined by the second determining module 15, to generate new texture corresponding to the to-be-rendered target layer that is changed. Texture corresponding to another to-be-rendered target layer that is unchanged on the foregoing page remains in an original state.

The foregoing synthesizing and displaying module 12 is further configured to synthesize the new texture corresponding to the to-be-rendered target layer that is changed, the texture corresponding to the another to-be-rendered target layer that is unchanged, and the texture corresponding to the layer including the another element in the foregoing source file, and display a synthesizing result on the page.

The page rendering apparatus involved in this embodiment may execute the foregoing method embodiment, implementation principles and technical effects of the page rendering apparatus are similar, and details are not described herein again.

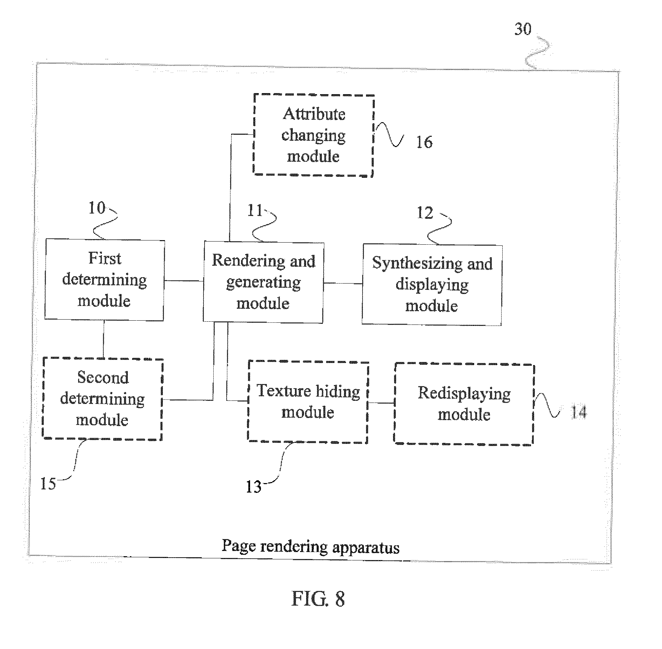

FIG. 8 is a schematic structural diagram of Embodiment 4 of a page rendering apparatus according to the present invention. Based on the embodiment shown in FIG. 7, further, the foregoing page rendering apparatus 30 may further include:
an attribute changing module 16, configured to: when location information or transparency information of any one or more to-be-rendered target layers of the to-be-rendered target layers changes, determine the one or more to-be-rendered target layers, which are changed, according to the location information or the transparency information of the to-be-rendered target layers; and change a texture attribute of texture corresponding to the one or more to-be-rendered target layers.

Correspondingly, the synthesizing and displaying module is further configured to synthesize texture that is obtained after the texture attribute of the texture corresponding to the one or more to-be-rendered target layers is changed, texture corresponding to another to-be-rendered target layer that is unchanged, and the texture corresponding to the layer including the another element in the source file, and display a synthesizing result on the page.

The page rendering apparatus involved in this embodiment may execute the foregoing method embodiment, implementation principles and technical effects of the page rendering apparatus are similar, and details are not described herein again.

Further, based on the foregoing embodiment, the foregoing rendering and generating module 11 is specifically configured to arrange one or more elements included in the foregoing to-be-rendered target layer; generate a drawing command for the to-be-rendered target layer according to drawing information of the arranged element included in the to-be-rendered target layer; draw, according to the drawing command for the to-be-rendered target layer, an image corresponding to the to-be-rendered target layer; and transform the image corresponding to the to-be-rendered target layer into the texture corresponding to the to-be-rendered target layer.

The page rendering apparatus involved in this embodiment may execute the foregoing method embodiment, implementation principles and technical effects of the page rendering apparatus are similar, and details are not described herein again.

It can be seen that, according to the page rendering apparatus provided in the embodiment of the present invention, when content of one or more to-be-rendered target layers of the foregoing to-be-rendered target layers changes, only these to-be-rendered target layers at which the content change occurs need to be re-rendered; when location information or shape information of one or more to-be-rendered target layers of the foregoing to-be-rendered target layers changes, only a texture attribute of original texture corresponding to the to-be-rendered target layers that are changed needs to be changed, so that a process of re-rendering all the to-be-rendered target layers is avoided, rendering performance is further improved, and overheads of a computer are reduced.

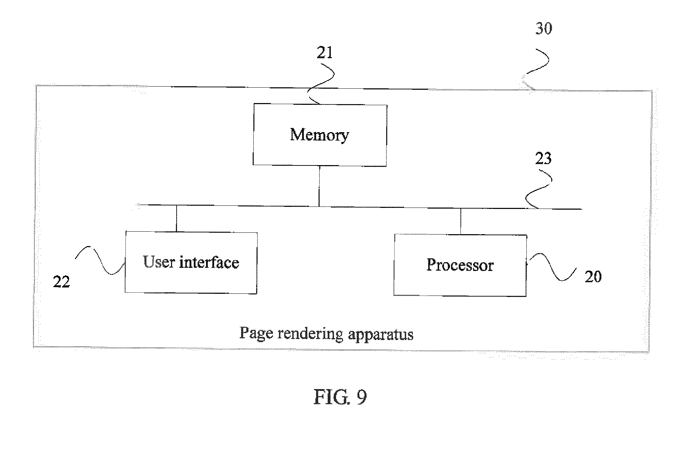

FIG. 9 is a schematic structural diagram of Embodiment 5 of a page rendering apparatus according to the present invention. As shown in FIG. 9, the page rendering apparatus 30 includes: a processor 20, a memory 21, and a user interface 22, which are connected by using a bus 23. Certainly, in addition to these, the page rendering apparatus provided in the embodiment of the present invention may further include a communications interface and the like, which are used for communicating with another device. The page rendering apparatus shown in FIG. 9 may specifically be an electronic device, such as a mobile phone, a tablet computer, a desktop computer, a portable computer, and a server.

The bus 23 is configured to implement connection and communication between the processor 20, the memory 21, and the user interface 22. The bus may be an ISA (Industry Standard Architecture, industry standard architecture) bus, a PCI (Peripheral Component Interconnect, peripheral component interconnect) bus, or an EISA (Extended Industry Standard Architecture, extended industry standard architecture) bus, or the like. The bus may be one or more physical lines. When the bus is multiple physical lines, the bus may be categorized into an address bus, a data bus, a control bus, and the like.

The user interface 22 is configured to receive an operation of a user, or display a page to a user. For example, in the embodiment of the present invention, the user operates the page by using the user interface 22, so that content on the page changes, which triggers the processor 20 to re-render the page.

The memory 21 is configured to store a computer program, which may include an application and an operating system program.

The processor 20 is configured to read the computer program from the memory 21 and perform the following operations, which are specifically:
determining an animation element according to an animation element identifier included in a source file corresponding to the page, where the animation element identifier is used to indicate the animation element; using the animation element, or the animation element and a sub-element of the animation element as a to-be-rendered target layer, and rendering the to-be-rendered target layer to obtain texture corresponding to the to-be-rendered target layer; and synthesizing the texture corresponding to the to-be-rendered target layer and texture corresponding to a layer including another element in the source file, and displaying a synthesizing result on the page.

Optionally, the foregoing processor 20 may be further configured to: when any element included in the foregoing to-be-rendered target layer is hidden, determine whether the element is an element indicated by a texture hiding identifier, and if the element is the element indicated by the texture hiding identifier, hide the texture corresponding to the foregoing to-be-rendered target layer; and when the foregoing hidden element is redisplayed, redisplay the foregoing hidden texture.

Optionally, when content of any one or more to-be-rendered target layers of the foregoing to-be-rendered target layers changes, the foregoing processor 20 may be further configured to: determine the one or more to-be-rendered target layers, which are changed, of the to-be-rendered target layers according to attribute information corresponding to the foregoing to-be-rendered target layers; re-render the one or more to-be-rendered target layers that are changed, to generate new texture corresponding to the to-be-rendered target layer that is changed, where texture corresponding to another to-be-rendered target layer that is unchanged on the foregoing page remains in an original state; and synthesize the new texture corresponding to the foregoing to-be-rendered target layer that is changed, the texture corresponding to the another to-be-rendered target layer that is unchanged, and the texture corresponding to the layer including the another element in the foregoing source file, and display a synthesizing result on the page.

In another implementation manner, if location information or transparency information of any one or more to-be-rendered target layers of the foregoing to-be-rendered target layers changes, the foregoing processor 20 may be further configured to: determine the one or more to-be-rendered target layers, which are changed, according to the location information or the transparency information of the to-be-rendered target layers; change a texture attribute of texture corresponding to the one or more to-be-rendered target layers; and synthesize texture that is obtained after the texture attribute of the texture corresponding to the one or more to-be-rendered target layers is changed, the texture corresponding to the another to-be-rendered target layer that is unchanged, and the texture corresponding to the layer including the another element in the source file, and display a synthesizing result on the page.

Optionally, the foregoing processor 20 is specifically configured to: when the to-be-rendered target layer is rendered to generate texture corresponding to the to-be-rendered target layer, arrange one or more elements included in the foregoing to-be-rendered target layer; generate a drawing command for the foregoing to-be-rendered target layer according to drawing information of the arranged element included in the to-be-rendered target layer; draw, according to the drawing command for the to-be-rendered target layer, an image corresponding to the to-be-rendered target layer; and transform the image corresponding to the to-be-rendered target layer into the texture corresponding to the to-be-rendered target layer.

The page rendering apparatus involved in the embodiment may execute the foregoing method embodiment, the computer program included in the page rendering apparatus may be divided in a module form introduced in the foregoing apparatus embodiment, or in another module form, or module division may not be performed. For a specific implementation method, reference may be made to the foregoing embodiment, which is not described herein again.

In conclusion, according to the page rendering method and apparatus provided in the embodiments of the present invention, an animation element is determined according to an animation element identifier included in a source file corresponding to a page, and the determined animation element, or the animation element and a sub-element of the animation element are used as a to-be-rendered target layer; the to-be-rendered target layer is independently rendered (texture of a layer including another element may remain unchanged) to generate texture corresponding to the to-be-rendered target layer; and finally, the generated texture of the to-be-rendered target layer and the texture corresponding to the layer including the another element are synthesized, and a synthesizing result is displayed on the page. Therefore, users may specify, according to their own requirements, one or more elements that may change in the future as an animation element, and use the animation element, or the animation element and a sub-element of the animation element as a special layer. When the one or more elements change, the special layer may be independently processed, which prevents another layer from being affected and effectively improves page rendering performance.

Further, a user indicates in advance an element of a to-be-rendered target layer by using a texture hiding identifier, a rendering engine hides and stores the element according to the texture hiding identifier when the rendering engine needs to hide the element, and upon redisplaying, only texture of the to-be-rendered target layer needs to be redisplayed. Therefore, that an element of the to-be-rendered target layer can be hidden only by deleting the texture of the to-be-rendered target layer in the prior art is avoided, overheads of a computer are greatly reduced, and rendering performance is improved more effectively.

Furthermore, when content of one or more to-be-rendered target layers of the foregoing to-be-rendered target layers changes, only these to-be-rendered target layers at which the content change occurs need to be re-rendered; when location information or shape information of one or more to-be-rendered target layers of the foregoing to-be-rendered target layers changes, only a texture attribute of original texture corresponding to the to-be-rendered target layers that are changed needs to be changed, so that a process of re-rendering all the to-be-rendered target layers is avoided, rendering performance is further improved, and of the overheads of the computer are also reduced.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A page rendering method, comprising:
determining an animation element according to an animation element identifier comprised in a source file corresponding to a page, wherein the animation element identifier is used to indicate the animation element;
using the animation element, or the animation element and a sub-element of the animation element as a to-be-rendered target layer, and rendering the to-be-rendered target layer to obtain texture corresponding to the to-be-rendered target layer; and
synthesizing the texture corresponding to the to-be-rendered target layer and texture corresponding to a layer comprising another element in the source file, and displaying a synthesizing result on the page.

2. The page rendering method according to claim 1, further comprising:
when any element comprised in the to-be-rendered target layer is hidden, determining whether the element is an element indicated by a texture hiding identifier, and if the element is the element indicated by the texture hiding identifier, hiding the texture corresponding to the to-be-rendered target layer; and
when the hidden element is redisplayed, redisplaying the hidden texture.

3. The page rendering method according to claim 1 or 2, wherein when content of any one or more to-be-rendered target layers of the to-be-rendered target layers changes, the method further comprises:
determining the one or more to-be-rendered target layers, which are changed, of the to-be-rendered target layers according to content attribute information corresponding to the to-be-rendered target layers;
re-rendering the one or more to-be-rendered target layers that are changed, to generate new texture corresponding to the one or more to-be-rendered target layers that are changed, wherein texture corresponding to another to-be-rendered target layer that is unchanged on the page remains in an original state; and
synthesizing the new texture corresponding to the to-be-rendered target layer that is changed, the texture corresponding to the another to-be-rendered target layer that is unchanged, and the texture corresponding to the layer comprising the another element in the source file, and displaying a synthesizing result on the page.

4. The page rendering method according to claim 1 or 2, wherein when location information or transparency information of any one or more to-be-rendered target layers of the to-be-rendered target layers changes, the method further comprises:
determining the one or more to-be-rendered target layers, which are changed, according to location information or the transparency information of to-be-rendered target layers;
changing a texture attribute of texture corresponding to the one or more to-be-rendered target layers; and
synthesizing texture that is obtained after the texture attribute of the texture corresponding to the one or more to-be-rendered target layers is changed, texture corresponding to another to-be-rendered target layer that is unchanged, and the texture corresponding to the layer comprising the another element in the source file, and displaying a synthesizing result on the page.

5. The page rendering method according to any one of claims 1 to 4, wherein the rendering the to-be-rendered target layer to obtain texture corresponding to the to-be-rendered target layer comprises:
arranging one or more elements comprised in the to-be-rendered target layer;
generating a drawing command for the to-be-rendered target layer according to drawing information of the arranged one or more element comprised in the to-be-rendered target layer;
drawing, according to the drawing command for the to-be-rendered target layer, an image corresponding to the to-be-rendered target layer; and
transforming the image corresponding to the to-be-rendered target layer into the texture corresponding to the to-be-rendered target layer.

6. A page rendering apparatus, comprising:
a first determining module, configured to determine an animation element according to an animation element identifier comprised in a source file corresponding to a page, wherein the animation element identifier is used to indicate the animation element;
a rendering and generating module, configured to use the animation element determined by the first determining module, or the animation element and a sub-element of the animation element as a to-be-rendered target layer, and render the to-be-rendered target layer to obtain texture corresponding to the to-be-rendered target layer; and
a synthesizing and displaying module, configured to synthesize the texture that is corresponding to the to-be-rendered target layer and obtained by the rendering and generating module, and texture corresponding to a layer comprising another element in the source file, and display a synthesizing result on the page.

7. The page rendering apparatus according to claim 6, wherein the page rendering apparatus further comprises:
a texture hiding module, configured to: when any element comprised in the to-be-rendered target layer is hidden, determine whether the element is an element indicated by a texture hiding identifier, and if the element is the element indicated by the texture hiding identifier, hide the texture corresponding to the to-be-rendered target layer; and
a redisplaying module, configured to redisplay the hidden texture when the element hidden by the texture hiding module is redisplayed.

8. The page rendering apparatus according to claim 6 or 7, wherein the page rendering apparatus further comprises:
a second determining module, configured to determine, when content of any one or more to-be-rendered target layers of the to-be-rendered target layers changes, the one or more to-be-rendered target layers, which are changed, of the to-be-rendered target layers according to content attribute information corresponding to the to-be-rendered target layers, wherein
the rendering and generating module is further configured to re-render the one or more to-be-rendered target layers that are changed and that are determined by the second determining module, to generate new texture corresponding to the to-be-rendered target layer that is changed, wherein texture corresponding to another to-be-rendered target layer that is unchanged on the page remains in an original state; and
the synthesizing and displaying module is further configured to synthesize the new texture corresponding to the to-be-rendered target layer that is changed, the texture corresponding to the another to-be-rendered target layer that is unchanged, and the texture corresponding to the layer comprising the another element in the source file, and display a synthesizing result on the page.

9. The page rendering apparatus according to claim 6 or 7, wherein the page rendering apparatus further comprises:
an attribute changing module, configured to: when location information or transparency information of any one or more to-be-rendered target layers of the to-be-rendered target layers changes, determine the one or more to-be-rendered target layers, which are changed, according to location information or transparency information of the to-be-rendered target layers; and change a texture attribute of texture corresponding to the one or more to-be-rendered target layers, wherein
the synthesizing and displaying module is further configured to synthesize texture that is obtained after the texture attribute of the texture corresponding to the one or more to-be-rendered target layers is changed, texture corresponding to another to-be-rendered target layer that is unchanged, and the texture corresponding to the layer comprising the another element in the source file, and display a synthesizing result on the page.

10. The page rendering apparatus according to any one of claims 6 to 9, wherein the rendering and generating module is specifically configured to: arrange one or more elements comprised in the to-be-rendered target layer; generate a drawing command for the to-be-rendered target layer according to drawing information of the arranged element comprised in the to-be-rendered target layer; draw, according to the drawing command for the to-be-rendered target layer, an image corresponding to the to-be-rendered target layer; and transform the image corresponding to the to-be-rendered target layer into the texture corresponding to the to-be-rendered target layer.
